(19) Europäisches Patentamt
European Patent Office
Office européen des brevets

(11) **EP 4 343 623 A1**

(12) **DEMANDE DE BREVET EUROPEEN**

(43) Date de publication:
**27.03.2024 Bulletin 2024/13**

(21) Numéro de dépôt: **23196134.3**

(22) Date de dépôt: **08.09.2023**

(51) Classification Internationale des Brevets (IPC):
**G06N 3/045** (2023.01)    **G06N 3/0464** (2023.01)
**G06N 3/084** (2023.01)    **G06N 3/0495** (2023.01)

(52) Classification Coopérative des Brevets (CPC):
**G06N 3/0495; G06N 3/045; G06N 3/0464;**
G06N 3/084

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **21.09.2022 FR 2209551**

(71) Demandeur: **STMicroelectronics (Rousset) SAS**
**13790 Rousset (FR)**

(72) Inventeurs:
• **DEMAJ, Pierre**
**06200 NICE (FR)**
• **FOLLIOT, Laurent**
**06620 GOURDON (FR)**

(74) Mandataire: **Casalonga**
**Casalonga & Partners**
**Bayerstraße 71/73**
**80335 München (DE)**

(54) **RÉSEAU DE NEURONES ARTIFICIELS COMPORTANT AU MOINS UNE CELLULE UNITAIRE QUANTIFIÉE EN BINAIRE**

(57)    Selon un aspect, il est proposé un réseau de neurones artificiels comportant une cellule unitaire (UCEL) comprenant :
- une première couche de convolution bidimensionnelle binaire (CONV1) configurée pour recevoir un tenseur d'entrée (IT) et pour générer un premier tenseur (T1), puis
- une première couche de normalisation par lot (BN1), puis
- une couche de concaténation (CONC) configuré pour générer un tenseur (T3) concaténant le tenseur d'entrée (IT) et un tenseur (T2) généré par la première couche de normalisation par lot (BN1), puis
- une seconde couche de convolution bidimensionnelle binaire (CONV2), puis
- une seconde couche de normalisation par lot (BN2).

[Fig 1]

EP 4 343 623 A1

**Description**

Des modes de réalisation et de mise en oeuvre concernent les réseaux de neurones artificiels.

Les réseaux de neurones artificiels comprennent généralement une succession de couches de neurones. Chaque couche prend en entrée des données, notamment un tenseur de données, auxquelles des poids sont appliqués et délivre en sortie des données, notamment un tenseur de données, après traitement par des fonctions d'activation des neurones de ladite couche. Ces données de sortie sont transmises à la couche suivante dans le réseau de neurones.

Les poids sont des données, plus particulièrement des paramètres, de neurones configurables pour obtenir de bonnes données en sortie des couches.

Les poids sont ajustés lors d'une phase d'apprentissage généralement supervisée, notamment en exécutant le réseau de neurones avec comme données d'entrée des données déjà classifiées d'une base de données de référence.

Les réseaux de neurones peuvent être quantifiés. En particulier, la quantification du réseau de neurones consiste à définir un format de représentation de données du réseau de neurones, tels que les poids ainsi que les entrées et les sorties de chaque couche du réseau de neurones. Les couches d'un réseau de neurones sont généralement quantifiées en flottant, en huit bits.

Toutefois, les réseaux de neurones quantifiés en flottant ou en huit bits ont des besoins en mémoire importants pour stocker les poids et les données générées par les différentes couches de ces réseaux de neurones.

Ainsi, certains réseaux de neurones sont quantifiés au moins partiellement en binaire pour accélérer leur exécution et réduire les besoins en mémoire pour le stockage des poids et des données générées par les différentes couches des réseaux de neurones.

Un réseau de neurones peut ainsi comporter au moins une couche quantifiée en binaire. Les poids de ladite au moins une couche prennent alors comme valeur '0' ou '1'. Les valeurs générées par certaines couches du réseau de neurones (en d'autres termes, les « activations ») peuvent également être binaire, et donc prendre comme valeur '0' ou '1'. Le réseau de neurones peut néanmoins présenter certaines couches, notamment une couche d'entrée et une couche de sortie, quantifiées en huit bits ou en flottants. Les couches, dites couches cachées (en anglais « hidden layers »), situées entre la couche d'entrée et la couche de sortie peuvent alors être quantifiées en binaire. Un réseau de neurones quantifié en binaire pour la plupart de ces couches peut être obtenus simplement pour identifier (classifier) un élément dans un signal physique ou bien pour détecter la position d'un tel élément dans le signal physique.

Les réseaux de neurones au moins partiellement quantifiés en binaire sont conçus pour être exécutés plus rapidement que les réseaux de neurones quantifiés en flottant ou en huit bits, et pour réduire les besoins en mémoire par rapport à ces derniers réseaux de neurones.

Néanmoins, la conception d'un réseau de neurones au moins partiellement binaire est généralement plus complexe que celle des réseaux de neurones quantifiés en flottant ou huit bits.

En particulier, certaines topologies de réseaux de neurones quantifiés en flottant ou huit bits ne sont pas toujours adaptées pour des réseaux de neurones quantifiés en binaire. En particulier, certaines topologies utilisées pour les réseaux de neurones quantifiés en flottant ou huit bits et appliquées à un réseau de neurones quantifié en binaire peuvent entraîner une perte d'informations entre les couches de ce réseau de neurones quantifié en binaire. Cette perte d'informations peut provoquer une baisse de la précision du réseau de neurones quantifié en binaire. Ainsi, ces topologies ne permettent pas toujours d'obtenir des performances suffisantes en termes de précision pour les réseaux de neurones quantifiés en binaire.

Par exemple, une topologie connue pour les réseaux de neurones quantifiés en flottant ou huit bits consiste à réaliser une succession d'une couche de convolution en profondeur (en anglais « depthwise convolution ») et d'une couche de convolution point par point (« en anglais « pointwise convolution »). Une telle topologie n'est pas adaptée pour les réseaux de neurones quantifiés en binaire du fait de la perte d'informations qu'elle peut entraîner.

Afin de compenser des pertes de précision d'un réseau de neurones quantifié en binaire, il est courant d'augmenter le nombre de couches du réseau de neurones. Toutefois, l'augmentation du nombre de couches augmente les besoins en mémoire pour stocker les poids de ces couches ainsi que les données générées par ces couches. Il est également possible de garder certaines couches quantifiées en flottant ou en huit bits pour maintenir une précision suffisante du réseau de neurones, mais cela entraîne également une augmentation des besoins en mémoire.

Il existe donc un besoin de proposer une solution permettant d'obtenir des réseaux de neurones quantifiés au moins partiellement en binaire et ayant de bonnes performances en termes de précision, de temps d'exécution et de besoins en mémoire.

Selon un aspect, il est proposé un réseau de neurones artificiels comportant une cellule unitaire comprenant :

- une première couche de convolution bidimensionnelle binaire configurée pour recevoir un tenseur d'entrée et pour générer un premier tenseur, puis
- une première couche de normalisation par lot, puis
- une couche de concaténation configurée pour générer un tenseur concaténant le tenseur d'entrée et un tenseur généré par la première couche de normalisation par lot, puis

- une seconde couche de convolution bidimensionnelle binaire, puis
- une seconde couche de normalisation par lot.

Le réseau de neurones comporte donc une cellule unitaire comportant uniquement des couches quantifiées en binaire. En d'autres termes, les couches de la cellule unitaire comportent des poids quantifiés sur un bit et les tenseurs pris en entrée et en sortie de chacune de ces couches ont des valeurs quantifiées également sur un bit. Ainsi, l'exécution d'un tel réseau de neurones est plus rapide, requiert moins de ressources mémoire, et consomme moins d'énergie par rapport à un réseau de neurones quantifié en flottant ou en huit bits. En outre, il est possible de configurer une telle cellule unitaire en fonction des dimensions du tenseurs d'entrée et du tenseur de sortie souhaités. Par ailleurs, la couche de concaténation permet d'entraîner efficacement le réseau de neurones par rétropropagation de gradient. De la sorte, le réseau de neurones entraîné permet de réduire les pertes de précision par rapport aux réseaux de neurones quantifiés en flottant ou en huit bits.

Dans un mode de réalisation avantageux, la première couche de convolution bidimensionnelle binaire est effectuée en profondeur sur le tenseur d'entrée (en anglais « depthwise convolution »).

Avantageusement, la seconde couche de convolution bidimensionnelle binaire est effectuée point par point sur le tenseur généré par la couche de concaténation (en anglais « pointwise convolution »).

De préférence, ladite au moins une cellule unitaire comporte également une couche de mise en commun entre la seconde couche de convolution bidimensionnelle binaire et la seconde couche de normalisation par lot.

La couche de mise en commun (en anglais « pooling layer ») peut être une couche de mise en commun maximale (« maxpool ») ou minimale (« minpool »). En particulier, la couche de mise en commun permet de combiner les sorties de la couche de convolution. La combinaison des sorties peut consister par exemple à prendre la valeur maximale (« maxPooling ») ou minimale (« minpooling ») des sorties de la couche de convolution. La couche de mise en commun permet de réduire la taille des cartes de sorties de la couche de convolution, tout en améliorant les performances du réseau de neurones.

Dans un mode de réalisation avantageux, le réseau de neurones comporte en outre au moins une couche d'extraction d'attributs configurée pour extraire des attributs d'un tenseur de données d'entrée et pour générer un tenseur des attributs extraits, ladite au moins une cellule unitaire étant configurée pour recevoir en entrée le tenseur des attributs extraits. Le tenseur d'entrée peut être de toute sorte. Par exemple, le tenseur d'entrée peut être un signal brut généré par un capteur, ou bien un signal transformé. La couche d'extraction d'attributs peut être configurée pour effectuer des fonctions de convolution, des fonctions non-linéaires ou des opérations matricielles.

Avantageusement, au moins une couche de classification configurée pour recevoir le tenseur généré en sortie de ladite au moins une cellule unitaire, pour classifier le tenseur de données reçu en entrée du réseau de neurones à partir du tenseur généré en sortie de ladite au moins une cellule unitaire, et pour délivrer en sortie du réseau de neurones la classe déterminée.

La couche de classification peut être de tout type. Elle est configurée pour retourner une classe du tenseur qu'elle reçoit, cette classe étant déterminée parmi une liste de classes possibles.

En variante, le réseau de neurones comporte en outre au moins une couche de détection configurée pour recevoir le tenseur généré en sortie de ladite au moins une cellule unitaire, pour détecter des éléments dans le tenseur de données reçu en entrée du réseau de neurones à partir du tenseur généré en sortie de ladite au moins une cellule unitaire, et pour délivrer en sortie du réseau de neurones les éléments détectés.

En particulier, la couche de détection peut être configurée pour générer une matrice de valeur pouvant être interprétée par l'application. La matrice peut par exemple correspondre à une position et à des dimensions d'un cadre de détection délimitant un élément détecté, ainsi qu'à une probabilité associée à cette détection d'élément.

Dans un mode de réalisation avantageux, le réseau de neurones artificiels comportant une pluralité de cellules unitaires successives.

En particulier, un réseau de neurones comportant une pluralité de cellule unitaires successives permet de répondre à des applications plus complexes.

Selon un aspect, il est proposé un produit programme d'ordinateur comprenant des instructions qui, lorsque le programme est exécuté par un ordinateur, conduisent celui-ci à mettre en oeuvre un réseau de neurones tel que décrit précédemment.

Selon un autre aspect, il est proposé un microcontrôleur comprenant une mémoire dans laquelle est stocké un programme tel que décrit précédemment.

Selon un autre aspect, il est proposé un procédé de traitement d'un tenseur de données comportant une mise en oeuvre d'un réseau de neurones tel que décrit précédemment.

D'autres avantages et caractéristiques de l'invention apparaîtront à l'examen de la description détaillée de modes de réalisation, nullement limitatifs, et des dessins annexés sur lesquels :

[Fig 1]
[Fig 2]
[Fig 3]
[Fig 4]

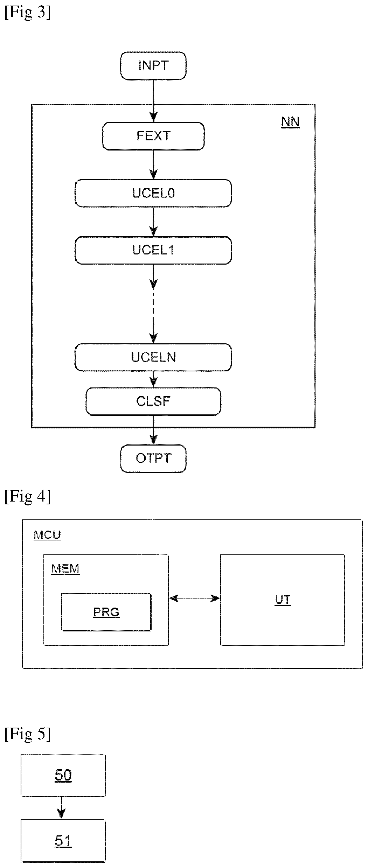

[Fig 5] illustrent des modes de réalisation et de mise en oeuvre de l'invention.

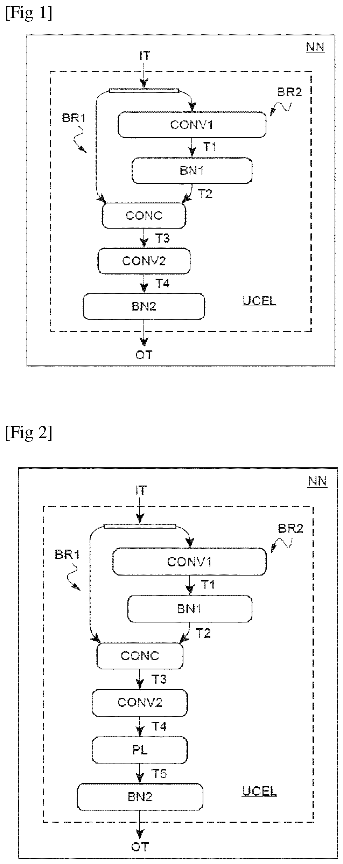

La figure 1 illustre un réseau de neurones artificiels NN selon un premier mode de réalisation. Le réseau de neurones artificiels NN comporte une cellule unitaire UCEL.

La cellule unitaire UCEL comporte une première couche de convolution bidimensionnelle binaire CONV1. Cette première couche de convolution CONV1 est configurée pour recevoir en entrée un tenseur IT. Le tenseur IT peut présenter plusieurs canaux. Par exemple, si le tenseur IT est une image, le tenseur IT peut présenter un canal pour la composante de couleur rouge, un autre canal pour la composante de couleur verte, et un autre canal pour la composante de couleur bleue.

Cette première couche de convolution CONV1 est quantifiée en binaire. En d'autres termes, cette première couche de convolution CONV1 présente des poids quantifiés sur un bit. Ainsi, chaque poids peut prendre comme valeur '0' ou '1'. Cette première couche de convolution CONV1 est également configurée pour générer un tenseur T1 quantifié sur un bit.

La première couche de convolution CONV1 est effectuée en profondeur sur le tenseur IT reçu en entrée de cette couche de convolution. En d'autres termes, la couche de convolution est configurée pour effectuer une convolution en utilisant des noyaux bidimensionnels sur les différents canaux du tenseur qu'elle reçoit en entrée. Par exemple, la première couche de convolution CONV1 est configurée pour générer un tenseur T1 dont les valeurs sont calculées à partir de la formule :

$$\sum_{i=1}^{N} w_i x_i + b = \pm x_1 \pm x_2 \pm \cdots \pm x_N + b$$,

où $x_1$ à $x_N$ correspondent aux données reçues en entrée de la première couche de convolution CONV1 appliquées à un noyau de taille N de cette couche de convolution avec des poids $w_1$ à $w_N$, et b correspond à un biais de la couche de convolution. Les données reçues en entrée sont binarisées grâce à la fonction signe suivante :

$$sign(x_i) = \begin{cases} 0 \ si \ x_i \geq 0 \\ 1 \ si \ x_i < 0 \end{cases}$$

La cellule unitaire UCEL comporte également une première couche de normalisation par lot BN1 (en anglais « batch normalization layer »). Cette première couche de normalisation par lot BN1 est configurée pour recevoir en entrée le tenseur binaire T1 délivré en sortie de la première couche de convolution. La première couche de normalisation par lot BN1 est configurée pour générer à partir, du tenseur T1 qu'elle reçoit en entrée, un tenseur T2 binaire centré et mis à échelle. De préférence, cette couche de normalisation par lot BN1 est fusionnée avec la première couche de convolution CONV1 de façon à générer en sortie un tenseur T2 quantifié en binaire.

La cellule unitaire UCEL comporte également une couche de concaténation CONC. Cette couche de concaténation CONC est configurée pour recevoir le tenseur d'entrée IT et le tenseur T2 généré par la première couche de normalisation par lot BN1. La couche de concaténation est configurée pour générer un tenseur T3 concaténant les deux tenseurs IT et T2 qu'elle reçoit en entrée.

La cellule unitaire UCEL comporte en outre une seconde couche de convolution bidimensionnelle binaire CONV2. La seconde couche de convolution CONV2 est configurée pour recevoir le tenseur T3 généré par la couche de concaténation CONC. Cette seconde couche de convolution CONV2 est quantifiée en binaire. La seconde couche de convolution CONV2 est effectuée point par point sur le tenseur T3 reçu en entrée de cette couche de convolution CONV2 de façon à générer un tenseur T4. En d'autres termes, la seconde couche de convolution CONV2 est configurée pour effectuer une convolution en utilisant un même noyau bidimensionnel de dimensions 1x1 sur l'ensemble des canaux du tenseur T3 qu'elle reçoit en entrée. Par exemple, la seconde couche de convolution CONV2 est configurée pour générer un tenseur T4 dont les valeurs sont calculées à partir de la formule : $\sum_{j=1}^{j=M} \sum_{i=1}^{N} w_i^j x_i^j + b$, où $x_1^j$ à $x_N^j$ correspondent aux données du canal j reçues en entrée de la première couche de convolution CONV2 appliquées à un noyau de taille N égale à 1x1 de cette couche de convolution avec des poids $w_1^j$ à $w_N^j$, M est le nombre de canaux d'entrée, et b correspond à un biais de la couche de convolution.

La cellule unitaire UCEL comporte en outre une seconde couche de normalisation par lot BN2. Cette seconde couche de normalisation BN2 est configurée pour recevoir le tenseur T4 généré en sortie de la seconde couche de convolution bidimensionnelle. La seconde couche de normalisation par lot BN2 est configurée pour générer à partir, du tenseur T4 qu'elle reçoit en entrée, un tenseur OT binaire centré et mis à échelle.

Une telle cellule unitaire UCEL présente ainsi deux branches BR1, BR2. La cellule unitaire UCEL n'est donc pas séquentielle. La branche BR1 permet de propager les informations du tenseur IT reçu en entrée de la cellule unitaire UCEL à l'aide de la couche de concaténation CONC qui effectue la concaténation en binaire pour limiter les impacts d'allocation mémoire requise. Cette information n'est donc pas perdue par la suite. La cellule unitaire UCEL peut être entraînée de façon à donner plus ou moins d'importances au tenseur d'entrée IT transmis par la branche BR1 et le tenseur T2 généré par la première couche de convolution CONV1 de la branche BR2.

La cellule unitaire UCEL comporte donc uniquement des couches quantifiées en binaires. Ainsi, l'exécution d'un tel réseau de neurones NN est plus rapide, requiert moins de ressources mémoire, et consomme moins d'énergie par rapport à un réseau de neurones quantifié en flottant ou en huit bits. Une telle cellule unitaire UCEL présente également l'avantage de pouvoir être entraînée de manière performante par rétropropagation de gradient, par exemple par un algorithme du gradient stochastique. En effet, le fait d'utiliser une couche de concaténation CONC permet de simplement propager le gradient lors de son entraînement, de façon à éviter un problème de disparition du gradient (connu également par l'expression anglo-saxonne « vanishing gradient problem »). De la sorte, le réseau de neurones NN entraîné permet de réduire les pertes de précision par rapport aux réseaux de neurones NN quantifiés en flottant ou en huit bits. En outre, il est possible de configurer une telle cellule unitaire en fonction des dimensions du tenseur d'entrée IT et du tenseur de sortie OT souhaités.

La figure 2 illustre un réseau de neurones artificiels NN selon un deuxième mode de réalisation. Ce réseau de neurones artificiels NN présente une cellule unitaire UCEL qui diffère de celle illustrée à la figure 1 en ce qu'elle comporte une couche de mise en commun PL entre la seconde couche de convolution bidimensionnelle binaire CONV2 et la seconde couche de normalisation par lot BN2. Ainsi, cette couche de mise en commun PL est configurée pour recevoir le tenseur T4 généré par la seconde couche de convolution bidimensionnelle CONV2. La couche de mise en commun est configurée pour générer un tenseur T5.

La couche de mise en commun PL (en anglais « pooling layer ») peut être une couche de mise en commun maximale (« maxpool ») ou minimale (« minpool »). En particulier, la couche de mise en commun PL permet de combiner les sorties de la couche de convolution CONV2. La combinaison des sorties peut consister par exemple à prendre la valeur maximale (« maxPooling ») ou minimale (« minpooling ») des sorties de la couche de convolution CONV2. La couche de mise en commun PL permet d'améliorer les performances du réseau de neurones NN.

La couche de normalisation par lot BN2 est alors configurée pour prendre en entrée le tenseur T5 généré par la couche de mise en commun. La couche de normalisation par lot BN2 est donc configurée pour générer un tenseur OT binaire centré et mis à échelle.

La figure 3 illustre un réseau de neurones artificiels NN selon un troisième mode de réalisation. Le réseau de neurones est configuré pour recevoir en entrée un tenseur de données d'entrée INPT. Le tenseur d'entrée INPT peut être de toute sorte. Par exemple, le tenseur d'entrée INPT peut être un signal brut généré par un capteur, ou bien un signal transformé. Le tenseur d'entrée INPT peut être une image par exemple.

Le réseau de neurones artificiels NN comprend une couche d'extraction d'attributs FEXT. La couche d'extraction d'attributs FEXT est configurée pour extraire des attributs du tenseur d'entrée. Par exemple, lorsque le tenseur d'entrée INPT est une image, il est possible d'extraire des informations sur des couleurs et/ou des textures de l'image.

Le réseau de neurones artificiels NN comprend également une succession de cellules unitaires UCEL0, UCEL1, ..., UCELN telles que celles décrites en relation avec la figure 1 ou avec la figure 2. Le nombre de cellule unitaires dépend des besoins de l'application visée du réseau de neurones. Par exemple, le nombre de cellule unitaires est compris entre deux et six.

Le réseau de neurones artificiels NN comprend en outre une couche de classification CLSF. La couche de classification CLSF est configurée pour déterminer une classe du tenseur de données d'entrée à partir des attributs extraits par la couche d'extraction. En particulier, la classe peut être déterminée parmi une liste de classes possibles. La classe déterminée par la couche de classification est transmise dans un tenseur de sortie OTPT.

En variante, à la place de la couche de classification CLSF, le réseau de neurones peut comprendre une couche de détection. La couche de détection est configurée pour détecter la présence et la position d'un élément dans le tenseur de données d'entrée. Par exemple, la couche de détection peut être configurée pour détecter un objet ou une personne dans une image utilisée comme tenseur de données d'entrée. La couche de détection est configurée pour générer une matrice de valeur pouvant être interprétée par l'application. La matrice peut par exemple correspondre à une position et à des dimensions d'un cadre de détection délimitant un élément détecté, ainsi qu'à une probabilité associée à cette détection d'élément.

La figure 4 illustre un microcontrôleur MCU comprenant une unité de traitement UT et une mémoire MEM dans laquelle est stocké un programme d'ordinateur PRG. Le programme d'ordinateur PRG comporte des instructions qui, lorsque le programme PRG est exécuté par l'unité de traitement UT, conduisent celui-ci à mettre en oeuvre un réseau de neurones NN, tel que ceux décrits en relation avec les figures 1 à 3.

La figure 5 illustre un procédé de traitement d'un tenseur de données. Le procédé comprend une étape 50 d'obtention du tenseur de données. Par exemple, un microcontrôleur MCU tel que celui décrit à la figure 4 peut être configuré pour pouvoir obtenir un tenseur de données généré par un capteur. Le procédé comprend ensuite une étape 51 de mise en oeuvre d'un réseau de neurones, tel que ceux décrits en relation avec les figures 1 à 4. Le réseau de neurones NN est alors mis en oeuvre en recevant en entrée le tenseur de données. Le réseau de neurones peut être mis en oeuvre par l'unité de traitement du microcontrôleur de la figure 4.

**Revendications**

1. Réseau de neurones artificiels comportant une cellule unitaire (UCEL) comprenant :

    - une première couche de convolution bidimensionnelle binaire (CONV1) configurée pour recevoir un tenseur d'entrée (IT) et pour générer un premier tenseur (T1), puis

- une première couche de normalisation par lot (BN1), puis

- une couche de concaténation (CONC) configurée pour générer un tenseur (T3) concaténant le tenseur d'entrée (IT) et un tenseur (T2) généré par la première couche de normalisation par lot (BN1), puis

- une seconde couche de convolution bidimensionnelle binaire (CONV2), puis

- une seconde couche de normalisation par lot (BN2).

2. Réseau de neurones artificiels selon la revendication 1, dans lequel la première couche de convolution bidimensionnelle binaire (CONV1) est effectuée en profondeur sur le tenseur d'entrée (IT).

3. Réseau de neurones artificiels selon l'une des revendications 1 ou 2 dans lequel la seconde couche de convolution bidimensionnelle binaire (CONV2) est effectuée point par point sur le tenseur (T3) généré par la couche de concaténation.

4. Réseau de neurones artificiels selon l'une des revendications 1 à 3 dans lequel ladite au moins une cellule unitaire (UCEL) comporte également une couche de mise en commun (PL) entre la seconde couche de convolution bidimensionnelle binaire (CONV2) et la seconde couche de normalisation par lot (BN2).

5. Réseau de neurones artificiels selon l'une des revendications 1 à 4, comportant en outre au moins une couche d'extraction d'attributs (FEXT) configurée pour extraire des attributs d'un tenseur de données d'entrée (INPT) et pour générer un tenseur des attributs extraits, ladite au moins une cellule unitaire (UCEL) étant configurée pour recevoir en entrée le tenseur des attributs extraits.

6. Réseau de neurones artificiels selon l'une des revendications 1 à 5, comportant en outre au moins une couche de classification (CLSF) configurée pour recevoir le tenseur généré en sortie de ladite au moins une cellule unitaire (UCEL), pour classifier le tenseur de données (INPT) reçu en entrée du réseau de neurones à partir du tenseur généré en sortie de ladite au moins une cellule unitaire (UCEL), et pour délivrer en sortie du réseau de neurones la classe déterminée (OTPT).

7. Réseau de neurones artificiels selon l'une des revendications 1 à 5, comportant en outre au moins une couche de détection configurée pour recevoir le tenseur généré en sortie de ladite au moins une cellule unitaire (UCEL), pour détecter des éléments dans le tenseur de données (INPT) reçu en entrée du réseau de neurones à partir du tenseur généré en sortie de ladite au moins une cellule unitaire (UCEL), et pour délivrer en sortie du réseau de neurones les éléments détectés.

8. Réseau de neurones artificiels selon l'une des revendications 1 à 7, comportant une pluralité de cellules unitaires (UCEL) successives.

9. Produit programme d'ordinateur comprenant des instructions qui, lorsque le programme est exécuté par un ordinateur, conduisent celui-ci à mettre en oeuvre un réseau de neurones (NN) selon l'une des revendications 1 à 8.

10. Microcontrôleur comprenant une mémoire (MEM) dans laquelle est stocké un programme (PRG) selon la revendication 9 et une unité de traitement (UT) configurée pour exécuter ce programme (PRG).

11. Procédé de traitement d'un tenseur de données comportant une mise en oeuvre d'un réseau de neurones (NN) selon l'une des revendications 1 à 8.

[Fig 1]

[Fig 2]

[Fig 3]

```
                    ┌─────────┐
                    │  INPT   │
                    └────┬────┘
                         │
                         ▼
   ┌─────────────────────────────────────────────┐
   │                                         NN   │
   │            ┌──────────────┐                  │
   │            │    FEXT      │                  │
   │            └──────┬───────┘                  │
   │                   │                          │
   │                   ▼                          │
   │         ┌───────────────────┐                │
   │         │      UCEL0        │                │
   │         └─────────┬─────────┘                │
   │                   │                          │
   │                   ▼                          │
   │         ┌───────────────────┐                │
   │         │      UCEL1        │                │
   │         └─────────┬─────────┘                │
   │                   ┊                          │
   │                   ▼                          │
   │         ┌───────────────────┐                │
   │         │      UCELN        │                │
   │         └─────────┬─────────┘                │
   │                   ▼                          │
   │         ┌───────────────────┐                │
   │         │       CLSF        │                │
   │         └─────────┬─────────┘                │
   └───────────────────┼──────────────────────────┘
                       ▼
                  ┌─────────┐
                  │  OTPT   │
                  └─────────┘
```

[Fig 4]

```
┌─────────────────────────────────────────────────────┐
│  MCU                                                 │
│                                                      │
│   ┌──────────────────────┐    ┌──────────────────┐   │
│   │  MEM                 │    │                  │   │
│   │                      │    │                  │   │
│   │   ┌──────────────┐   │◄──►│       UT         │   │
│   │   │     PRG      │   │    │                  │   │
│   │   └──────────────┘   │    │                  │   │
│   └──────────────────────┘    └──────────────────┘   │
│                                                      │
└─────────────────────────────────────────────────────┘
```

[Fig 5]

```
   ┌──────────────┐
   │      50      │
   └──────┬───────┘
          │
          ▼
   ┌──────────────┐
   │      51      │
   └──────────────┘
```

# EP 4 343 623 A1

Europäisches
Patentamt

European
Patent Office

Office européen
des brevets

## RAPPORT DE RECHERCHE EUROPEENNE

Numéro de la demande

EP 23 19 6134

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/410318 A1 (DEL MUNDO CARLO EDUARDO CABANERO [US] ET AL) 31 décembre 2020 (2020-12-31) * figures 9, 11; tableau 1 * * alinéa [0035] * * alinéa [0039] * * alinéa [0043] * * alinéa [0053] * * alinéa [0064] * * alinéa [0068] * ----- | 1-11 | INV. G06N3/045 G06N3/0464 G06N3/084 G06N3/0495 |
| A | EP 3 660 747 A1 (BOSCH GMBH ROBERT [DE]) 3 juin 2020 (2020-06-03) * alinéa [0022] - alinéa [0030]; figures 4, 5 * ----- | 1-11 | |
| A | YAMAN UMUROGLU ET AL: "FINN: A Framework for Fast, Scalable Binarized Neural Network Inference", ARXIV.ORG, CORNELL UNIVERSITY LIBRARY, 201 OLIN LIBRARY CORNELL UNIVERSITY ITHACA, NY 14853, 1 décembre 2016 (2016-12-01), XP080742060, DOI: 10.1145/3020078.3021744 * page 2 * * page 4 - page 5; figure 2 * ----- | 1-11 | **DOMAINES TECHNIQUES RECHERCHES (IPC)** G06N |

Le présent rapport a été établi pour toutes les revendications

| Lieu de la recherche | Date d'achèvement de la recherche | Examinateur |
|---|---|---|
| Munich | 23 octobre 2023 | Herri, Edmond |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

      .........................................................................................
& : membre de la même famille, document correspondant

EPO FORM 1503 03.82 (P04C02)

EP 4 343 623 A1

## ANNEXE AU RAPPORT DE RECHERCHE EUROPEENNE
## RELATIF A LA DEMANDE DE BREVET EUROPEEN NO.

EP 23 19 6134

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-10-2023

| Document brevet cité au rapport de recherche | Date de publication | Membre(s) de la famille de brevet(s) | Date de publication |
|---|---|---|---|
| US 2020410318 A1 | 31-12-2020 | AUCUN | |
| EP 3660747 A1 | 03-06-2020 | CN 111260023 A | 09-06-2020 |
| | | EP 3660747 A1 | 03-06-2020 |
| | | KR 20200066215 A | 09-06-2020 |
| | | US 2020175351 A1 | 04-06-2020 |

EPO FORM P0460

Pour tout renseignement concernant cette annexe : voir Journal Officiel de l'Office européen des brevets, No.12/82